(19) **Europäisches Patentamt European Patent Office Office européen des brevets**

(11) **EP 2 715 411 B1**

(12) **FASCICULE DE BREVET EUROPEEN**

(45) Date de publication et mention
de la délivrance du brevet:
**09.03.2016 Bulletin 2016/10**

(51) Int Cl.:
*G08G 1/017* (2006.01)　　*G08G 1/04* (2006.01)
*G08G 1/052* (2006.01)　　*G01V 15/00* (2006.01)
*G07B 15/06* (2011.01)

(21) Numéro de dépôt: **12720195.2**

(22) Date de dépôt: **11.05.2012**

(86) Numéro de dépôt international:
**PCT/EP2012/058771**

(87) Numéro de publication internationale:
**WO 2012/159903 (29.11.2012 Gazette 2012/48)**

(54) **PROCEDE ET DISPOSITIF DE CALIBRATION DE LA POSITION D'UN LECTEUR DE BADGE MONTE SUR UN PORTIQUE SURPLOMBANT UNE VOIE DE CIRCULATION**

VERFAHREN UND VORRICHTUNG ZUR KALIBRIERUNG DER POSITION EINES PLAKETTENLESERS AUF EINEM PORTALRAHMEN ÜBER EINER FAHRSPUR

METHOD AND DEVICE FOR CALIBRATING THE POSITION OF A BADGE READER MOUNTED ON A PORTAL FRAME OVERHANGING A TRAVEL LANE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.05.2011 FR 1154457**

(43) Date de publication de la demande:
**09.04.2014 Bulletin 2014/15**

(73) Titulaire: **MORPHO**
**92130 Issy-Les-Moulineaux (FR)**

(72) Inventeur: **VARLET, Christophe**
**F-92130 Issy-Les-Moulineaux (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
**US-A- 5 606 534 　　US-A- 5 793 491**
**US-A1- 2006 044 147 　　US-B1- 6 442 503**

**Description**

La présente invention concerne un dispositif et un procédé de calibration de la position d'un lecteur de badge monté sur un portique surplombant une voie de circulation.

Il est connu d'installer des équipements de mesure sur des portiques en surplomb d'une route pour contrôler le trafic routier, voir, par exemple, US 5793491.

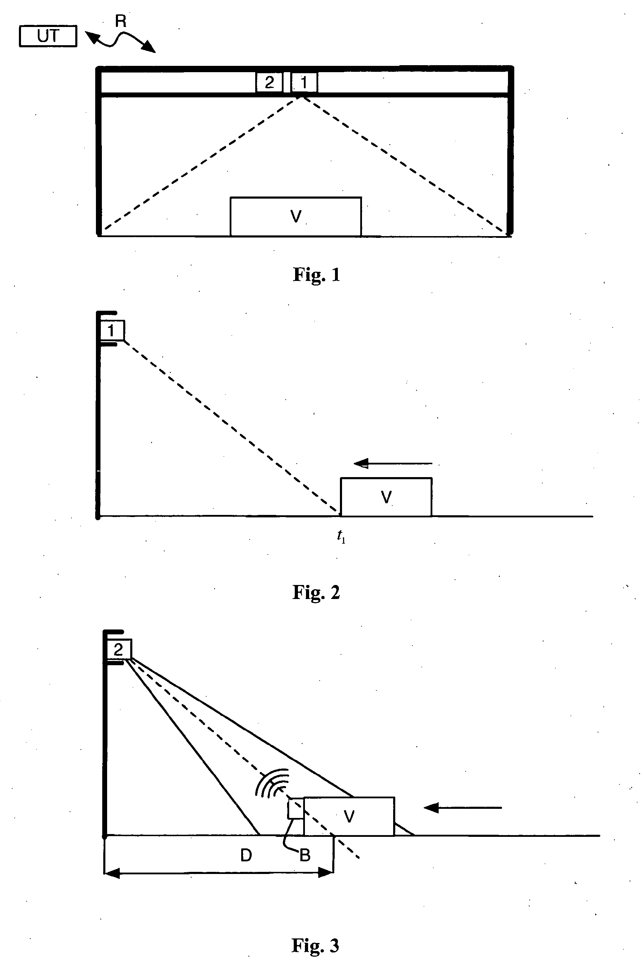

La Fig. 1 représente une vue de face et de profil d'un exemple de portique positionné en surplomb d'une voie de circulation. Cet exemple n'est donné qu'à titre illustratif et peut être étendu à des portiques surplombant plusieurs voies de circulation. Dans ce cas, chaque voie de circulation est contrôlée par un ensemble d'équipements de mesure décrit à la Fig. 1.

Le portique de la Fig. 1 porte un ensemble d'équipements de mesure formé, entre autres, d'un double laser 1 et d'un lecteur de badge 2. Ces équipements de mesure peuvent être des entités séparées ou intégrées partiellement ou en totalité dans une même entité. Cet ensemble d'équipements de mesure est associé à une unité de traitement UT prévue pour mettre en oeuvre des algorithmes. Cette unité de traitement peut-être partiellement ou en totalité intégrée à l'un ou plusieurs équipements de mesure, ou être montée sur le portique en tant qu'équipement indépendant ou encore être située à distance du portique. Cette unité de traitement UT peut alors communiquer par un réseau R de communication filaire ou sans fils avec au moins un des équipements de mesure montés sur le portique tel que schématiquement illustré sur la Fig. 1.

Le double laser 1 comporte, comme son nom l'indique, deux lasers, l'un latéral et l'autre longitudinal. Le laser longitudinal est positionné sur le portique pour pointer en amont de la voie de circulation à une distance prédéterminée tel qu'illustré sur la Fig. 2. Ce laser détermine un profil géométrique du véhicule V et l'instant $t_1$ où ce véhicule V entre dans son champ. Le laser latéral est positionné sur le portique pour contrôler la position latérale du véhicule V sur la voie de circulation lorsque celui-ci passe à l'aplomb du portique tel qu'illustré sur la Fig. 1 par les traits pointillés qui délimitent le faisceau de ce laser. Le laser latéral détermine l'instant $t_2$ de passage du véhicule sous le portique.

Ainsi, la vitesse moyenne VM du véhicule V est estimée à partir de ces deux instants $t_1$ et $t_2$, et de la distance entre l'aplomb du portique et le point sur la voie de circulation visé par ce laser longitudinal. En pratique, la vitesse du véhicule est ainsi estimée à 1km/h près.

Par ailleurs, certains véhicules, en particulier des camions, sont équipés de badges B situés sur l'avant de ces véhicules, habituellement au niveau de leurs parebrises. Un badge B émet une balise se présentant sous la forme d'ondes courte distance de type RFID (Radio Frequency Identification en anglais) ou encore DSRC (Dedicated Short Range Communications en anglais). La balise est réceptionnée par le lecteur de badge 2 puis les informations portées par cette balise sont traitées par l'unité de traitement UT.

Le lecteur de badge 2 est monté sur le portique de manière à ce qu'il pointe vers un point de la voie de circulation situé à une distance D de l'aplomb du portique. Cette distance D est prédéterminée pour que l'angle d'attaque des ondes radio soit optimal par rapport à l'orientation du pare-brise du véhicule (Fig. 3). Typiquement, la distance est égale à 8 mètres lorsque le lecteur de badge 2 est situé à 6,5 mètres au-dessus de la voie de circulation.

La qualité de réception du lecteur de badge 2 dépend fortement de la précision de cette distance D, c'est-à-dire de la précision avec laquelle le lecteur de badge est positionné sur le portique. A cet effet, au cours d'une phase dite de calibration, des mesures d'angles et de distances par rapport à la voie de circulation sont réalisés à l'aide de pointeurs laser et de repères visuels statiques installés sur la voie de circulation tels que des lignes centrales ou de bord de route ou encore des poteaux. Ces solutions nécessitent d'interrompre le trafic pour installer ces repères visuels statiques et pour réaliser des métrages sur cette voie de circulation.

De plus, une fois le lecteur de badge 2 positionné et en situation, il peut se produire des évènements extérieurs imprévisibles (vents forts, chocs d'un oiseau sur un équipement de mesure,...) qui modifient son positionnement et donc la distance D. La qualité de réception de la balise peut s'en trouver alors fortement dégradée et le lecteur de badge peut même devenir inopérant.

Le problème résolu par la présente invention est de déterminer l'erreur de positionnement de visée du lecteur de badge alors en situation sans avoir à interrompre le trafic et sans avoir à utiliser de repère visuel statique.

A cet effet, la présente invention concerne un procédé de calibration d'un lecteur de badge 2 embarqué dans un véhicule, ledit lecteur de badge 2 étant monté sur un portique surplombant une voie de circulation de manière à ce qu'il pointe vers un point de la voie de circulation situé à une distance D prédéterminée de l'aplomb du portique. Le procédé est caractérisé en ce qu'il comporte les étapes suivantes :

- calcul d'une estimée de ladite distance par le rapport entre une vitesse moyenne mesurée du véhicule et l'écart temporel entre un instant de détection du badge d'un véhicule par ledit lecteur de badge, et un instant de passage du véhicule à l'aplomb du portique, et
- calcul d'une estimée moyenne de ladite distance D par la moyenne de plusieurs estimées de ladite distance D ainsi calculées suite au passage de plusieurs véhicules sous le portique.

Ainsi, le procédé estime la distance D que ce soit périodiquement ou à chaque prise de nouvelles mesures car ce procédé est très peu gourmand en terme de puissance de calcul de données manipulées. Cette estimée de la distance D est alors comparée à la distance prédéterminée D ce qui permet à un opérateur d'avoir un retour sur le positionnement du lecteur de badge alors en situation et, éventuellement, déclencher automatiquement une alarme pour qu'une intervention soit prévue pour repositionner physiquement le lecteur de badge.

Selon un mode de réalisation, l'instant de passage du véhicule à l'aplomb du portique est déterminé par un laser.

Selon un mode de réalisation, la vitesse moyenne du véhicule est mesurée par un laser.

Selon un mode de réalisation, le nombre d'estimées de ladite distance est égal au nombre de véhicules passant sous le portique pendant une période de temps prédéterminée.

Ce mode est avantageux car la précision de l'estimée moyenne sera d'autant plus précise que le nombre de véhicules sera important. De plus, cette moyenne peut être calculée sur une fenêtre glissante ce qui permet une mise à jour de cette estimée dès qu'un nouveau véhicule passe sous le portique.

L'invention concerne également un dispositif qui comporte des moyens pour mettre en oeuvre l'un des procédés ci-dessus.

L'invention concerne également un programme d'ordinateur qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par le système informatique ou le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente schématiquement une vue de face et de profil d'un exemple de portique positionné en surplomb d'une voie de circulation.
La Fig. 2 représente schématiquement le positionnement du laser longitudinal sur le portique.
La Fig. 3 représente schématiquement le positionnement du lecteur de badge sur le portique.
La Fig. 4 illustre un mode de réalisation du procédé de calibration.
La Fig. 5 représente schématiquement l'architecture d'un dispositif prévu pour mettre en oeuvre le procédé.

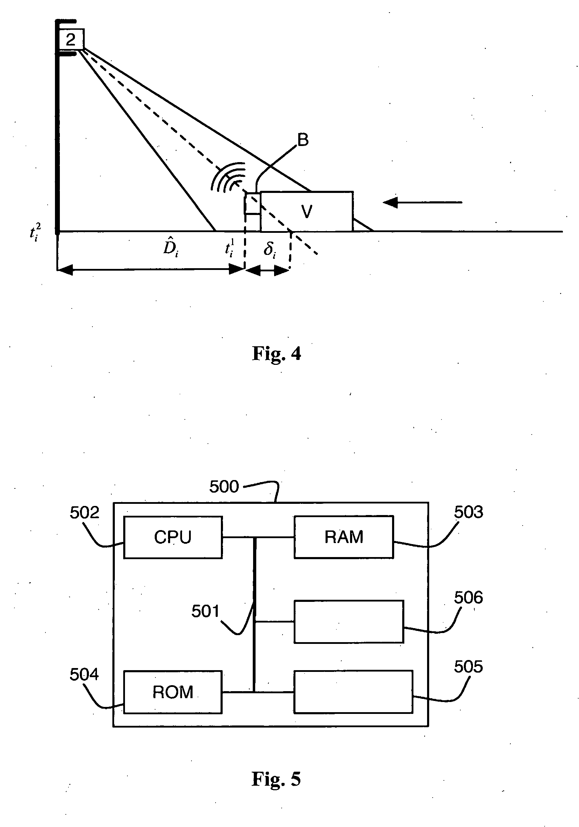

A la Fig. 4 sont illustrées les étapes du procédé de calibration de la position d'un lecteur de badge 2 monté sur le portique surplombant une voie de circulation tel que illustré aux Figs. 1 à 3.

Au cours de ce procédé, une estimée $\hat{D}_i$ de la distance D est calculée par le rapport entre une vitesse moyenne mesurée $VM_i$ d'un véhicule Vi et l'écart temporel entre un instant $t_i^1$ de détection du badge B du véhicule Vi par le lecteur de badge 2, et un instant de passages $t_i^2$ du véhicule Vi à l'aplomb du portique. En termes mathématiques, cette estimée $\hat{D}_i$ est donnée par:

$$\hat{D}_i^1 = \frac{VM_i}{\left( t_i^1 - t_i^2 \right)}$$

Comme on peut le voir sur la Fig. 4, l'estimée $\hat{D}_i$ n'est qu'une approximation de la distance D. Toutefois, l'erreur d'approximation $\delta_i$ de cette distance n'a pas d'influence sur la qualité de réception du lecteur de badge 2. D'où l'intérêt d'utiliser une balise DSRC qui est bien connue pour ses propriétés de rapidité d'émission.

Le procédé se poursuit par le calcul d'une estimée moyenne D de la distance D. Cette estimée D est la moyenne de N estimées $\hat{D}_i$ ainsi calculées suite au passage de N véhicules sous le portique.

Selon un mode de réalisation, l'instant $t_i^2$ de passage du véhicule à l'aplomb du portique est déterminé par un laser, de préférence, le laser latéral du double laser 1 (Fig. 1).

Selon un mode de réalisation, la vitesse moyenne $VM_i$ du véhicule Vi est mesurée par un laser, de préférence le laser longitudinal du double laser 1 (Fig. 1).

Selon un mode de réalisation, le nombre N d'estimées $\hat{D}_i$ est égal au nombre de véhicules passant sous le portique pendant une période de temps prédéterminée.

L'inventeur a observé que la précision de l'estimation de la distance D est de l'ordre de 10 cms pour un nombre N égal à 100.

La Fig. 5 illustre schématiquement l'architecture d'un dispositif 500 mettant en oeuvre le procédé.

Le dispositif 500 comporte, reliés par un bus de communication 501 :

- un processeur, micro-processeur, microcontrôleur (noté µc) ou CPU (*Central Processing Unit* en anglais ou *Unité Centrale de Traitement* en français) 502;
- une mémoire vive RAM (*Random Access Memory* en anglais ou *Mémoire à Accès Aléatoire* en français) 503;
- une mémoire morte ROM (*Read Only Memory* en anglais ou *Mémoire à Lecture Seule* en français) 504;
- un lecteur 505 de médium de stockage, tel qu'un lecteur de carte SD (*Secure Digital Card* en anglais ou *Carte Numérique Sécurisée* en français) ;
- des moyens d'interface 506 avec un réseau de communication, comme par exemple un réseau de radiotéléphonie cellulaire ;

Le microcontrôleur 502 est capable d'exécuter des instructions chargées dans la RAM 503 à partir de la ROM 504, d'une mémoire externe (non représentée), d'un support de stockage, tel qu'une carte SD ou autre, ou d'un réseau de communication. Lorsque le dispositif 500 est mis sous tension, le microcontrôleur 502 est capable de lire de la RAM 503 des instructions et de les exécuter. Ces instructions forment un programme d'ordinateur qui cause la mise en oeuvre, par le microcontrôleur 502, de tout ou partie des algorithmes décrits ci-après en relation avec la Fig. 4.

Tout ou partie des algorithmes décrits ci-après en relation avec la Fig. 4 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, tel que le microcontrôleur 502, ou être implémenté sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

Le dispositif comporte également ou est associé à des moyens pour mesurer la vitesse moyenne du véhicule, et des moyens pour mesurer un instant de passage $t_i^2$ du véhicule à l'aplomb du portique.

Selon un mode de réalisation, les moyens pour mesurer la vitesse moyenne du véhicule sont le double laser 1 qui peut, éventuellement, communiquer avec le dispositif 500 via les moyens d'interface 506.

Selon un mode de réalisation, les moyens pour mesurer un instant de passage $t_i^2$ du véhicule à l'aplomb du portique sont le laser latéral du double laser 1 qui peut, éventuellement, communiquer avec le dispositif 500 via les moyens d'interface 506.

Le dispositif peut également être intégré à l'unité de traitement UT.

**Revendications**

1. Procédé de calibration de la position d'un lecteur de badge (2) embarqué dans un véhicule, ledit lecteur de badge (2) étant monté sur un portique surplombant une voie de circulation de manière à ce qu'il pointe vers un point de la voie de circulation situé à une distance (D) prédéterminée de l'aplomb du portique, **caractérisé en ce qu'**il comporte les étapes suivantes :

   - calcul d'une estimée ($\hat{D}_i$) de ladite distance (D) par le rapport entre une vitesse moyenne mesurée (VM$_i$) du véhicule (Vi) et l'écart temporel entre un instant ($t_i^1$) de détection du badge d'un véhicule (Vi) par ledit lecteur de badge, et un instant de passage ($t_i^2$) du véhicule (Vi) à l'aplomb du portique, et
   - calcul d'une estimée moyenne ($\hat{D}$) de ladite distance (D) par la moyenne de plusieurs estimées ($\hat{D}_i$) de ladite distance (D) ainsi calculées suite au passage de plusieurs véhicules sous le portique.

2. Procédé selon la revendication 1, dans lequel l'instant ($t_i^2$) de passage du véhicule à l'aplomb du portique est déterminé par un laser.

3. Procédé selon la revendication 1 ou 2, dans lequel la vitesse moyenne du véhicule est mesurée par un laser.

4. Procédé selon l'une des revendications précédentes, dans lequel le nombre (N) d'estimées ($\hat{D}_i$) de ladite distance est égal au nombre de véhicules passant sous le portique pendant une période de temps prédéterminée.

**5.** Dispositif de calibration de la position d'un lecteur de badge (2) embarqué dans un véhicule, ledit lecteur de badge (2) étant monté sur un portique surplombant une voie de circulation de manière à ce qu'il pointe vers un point de la voie de circulation situé à une distance (D) prédéterminée de l'aplomb du portique, **caractérisé en ce qu'**il comporte des moyens adaptés à :

- mesurer la vitesse moyenne du véhicule,

- déterminer un instant de passage $(t_i^2)$ du véhicule (Vi) à l'aplomb du portique,

- calculer une estimée $(\hat{D}_i)$ de ladite distance (D) par le rapport entre la vitesse moyenne ainsi mesurée (VM$_i$) du véhicule (Vi) et l'écart temporel entre un instant $(t_i^1)$ de détection du badge d'un véhicule (Vi) par ledit lecteur de badge, et l'instant de passage $(t_i^2)$ du véhicule (Vi) à l'aplomb du portique, et

- calculer une estimée moyenne $(\hat{D})$ de ladite distance (D) par la moyenne de plusieurs estimées $(\hat{D}_i)$ de ladite distance (D) ainsi calculées suite au passage de plusieurs véhicules sous le portique.

**6.** Dispositif selon la revendication 5, dans lequel les moyens pour mesurer la vitesse moyenne du véhicule sont un laser.

**7.** Dispositif selon la revendication 5 ou 6, dans lequel les moyens pour mesurer un instant de passage $(t_i^2)$ du véhicule à l'aplomb du portique sont un laser.

**8.** Programme d'ordinateur, **caractérisé en ce qu'**il comprend des instructions pour mettre en oeuvre, par un dispositif adapté, le procédé selon l'une des revendications 1 à 4 lorsque ledit programme est exécuté par un processeur du dispositif.

**9.** Moyens de stockage, **caractérisés en ce qu'**ils stockent un programme d'ordinateur comprenant des instructions pour mettre en oeuvre, par un dispositif adapté, le procédé selon l'une des revendications 1 à 4, lorsque ledit programme est exécuté par un processeur du dispositif.

**Patentansprüche**

**1.** Verfahren zur Kalibrierung der Position eines Onboard-Plakettenlesers (2) eines Fahrzeugs, wobei der Plakettenleser (2) auf einen Portalrahmen über einer Fahrspur derart montiert ist, dass er zu einer Stelle der Fahrspur zeigt, die sich in einer vorbestimmten Entfernung (D) von der Senkrechten des Portalrahmens befindet, **dadurch gekennzeichnet, dass** es die folgenden Schritte aufweist:

- Berechnung einer Schätzung $(\hat{D}_i)$ der Entfernung (D) durch das Verhältnis zwischen einer gemessenen mittleren Geschwindigkeit (VM$_i$) des Fahrzeugs (Vi) und dem Zeitabstand zwischen einem Erfassungsaugenblick $(t_i^1)$ der Plakette eines Fahrzeugs (Vi) durch den Plakettenleser und einem Passageaugenblick $(t_i^2)$ des Fahrzeugs (Vi) an der Senkrechten des Portalrahmens, und
- Berechnung einer mittleren Schätzung (D) der Entfernung (D) durch den Durchschnitt mehrerer Schätzungen $(\hat{D}_i)$ der Entfernung (D), die derart im Anschluss an die Passage mehrerer Fahrzeuge unter dem Portalrahmen berechnet werden.

**2.** Verfahren nach Anspruch 1, bei dem der Passageaugenblick $(t_i^2)$ des Fahrzeugs in der Senkrechten des Portalrahmens durch einen Laser bestimmt wird.

**3.** Verfahren nach Anspruch 1 oder 2, wobei die mittlere Geschwindigkeit des Fahrzeugs durch einen Laser gemessen wird.

**4.** Verfahren nach einem der vorhergehenden Ansprüche, wobei die Anzahl (N) von Schätzungen $(\hat{D}_i)$ der Entfernung gleich der Anzahl Fahrzeuge ist, die unter dem Portalrahmen während einer vorbestimmten Zeitspanne passieren.

**5.** Kalibrierungsvorrichtung der Position eines Onboard-Plakettenlesers (2) in einem Fahrzeug, wobei der Plakettenleser (2) auf einen Portalrahmen über einer Fahrspur derart montiert ist, dass er zu einer Stelle der Fahrspur zeigt, die sich in einer vorbestimmten Entfernung (D) der Senkrechten des Portalrahmens befindet, **dadurch gekenn-**

**zeichnet, dass** sie Mittel umfasst, die zu Folgendem angepasst sind:

- Messen der mittleren Geschwindigkeit des Fahrzeugs,
- Bestimmen eines Passageaugenblicks ( $t_i^2$ ) des Fahrzeugs (Vi) in der Senkrechten des Portalrahmens,
- Berechnen einer Schätzung ($\hat{D}_i$) der Entfernung (D) durch das Verhältnis zwischen der derart gemessenen mittleren Geschwindigkeit (VM$_i$) des Fahrzeugs (Vi) und dem zeitlichen Abstand zwischen einem Erfassungs-augenblick ( $t_i^1$ ) der Plakette eines Fahrzeugs (Vi) durch den Plakettenleser und dem Passageaugenblick ( $t_i^2$ ) des Fahrzeugs (Vi) in der Senkrechten des Portalrahmens, und
- Berechnen einer mittleren Schätzung (D) der Entfernung (D) durch den Durchschnitt mehrerer Schätzungen ($\hat{D}_i$) der Entfernung (D), die derart im Anschluss an die Passage mehrerer Fahrzeuge unter dem Portalrahmens berechnet werden.

6. Vorrichtung nach Anspruch 5, wobei die Mittel zum Messen der mittleren Geschwindigkeit des Fahrzeugs ein Laser sind.

7. Vorrichtung nach Anspruch 5 oder 6, wobei die Mittel zum Messen eines Passageaugenblicks ( $t_i^2$ ) des Fahrzeugs in der Senkrechten des Portalrahmens ein Laser sind.

8. Computerprogramm, **dadurch gekennzeichnet, dass** es Anweisungen umfasst, um durch eine angepasste Vorrichtung das Verfahren nach einem der Ansprüche 1 bis 4 umzusetzen, wenn das Programm durch einen Prozessor der Vorrichtung ausgeführt wird.

9. Speichermittel, **dadurch gekennzeichnet, dass** sie ein Computerprogramm speichern, das Anweisungen umfasst, um durch eine angepasste Vorrichtung das Verfahren nach einem der Ansprüche 1 bis 4 umzusetzen, wenn das Programm durch einen Prozessor der Vorrichtung ausgeführt wird.

**Claims**

1. Method for calibrating the position of a badge reader (2) installed in a vehicle, said badge reader (2) being mounted on a gantry frame overhanging a travel lane in such a way that it points towards a point of the travel lane located at a predetermined distance (D) from the vertical of the portal frame, **characterized in that** comprises the following steps:

   - calculation of an estimate ($\hat{D}_1$) of said distance (D) by the ratio between a measured average speed (VM$_i$) of the vehicle (Vi) and the time difference between a moment ( $t_i^1$ ) of detection of the badge of a vehicle (Vi) by said badge reader, and a moment of crossing ( $t_i^2$ ) of the vehicle (Vi) vertically under the portal frame, and
   - calculation of an average estimate ($\hat{D}$ of said distance (D) by the average of multiple estimates ($\hat{D}_1$) of said distance (D) which are thus calculated following the crossing of multiple vehicles under the portal frame.

2. Method according to Claim 1, in which the moment ( $t_i^2$ ) of crossing of the vehicle vertically under the portal frame is determined by a laser.

3. Method according to Claim 1 or 2, in which the average speed of the vehicle is measured by a laser.

4. Method according to one of the preceding claims, in which the number (N) of estimates ($\hat{D}_1$) of said distance is equal to the number of vehicles crossing below the portal frame over a predetermined period of time.

5. Device for calibrating the position of a badge reader (2) installed in a vehicle, said badge reader (2) being mounted on a portal frame overhanging a travel lane in such a way that it points towards a point of the travel lane located at a predetermined distance (D) from the vertical of the portal frame, **characterized in that** comprises means adapted to:

   - measure the average speed of the vehicle,

- determine a moment of crossing ( $t_i{}^2$ ) of the vehicle (Vi) vertically under the portal frame,
- calculate an estimate ( $\hat{D}_1$ ) of said distance (D) by the ratio between the average speed thus measured (VM$_i$) of the vehicle (Vi) and the time difference between a moment ( $t_i{}^1$ ) of detection of the badge of a vehicle (Vi) by said badge reader, and the moment of crossing ( $t_i{}^2$ ) of the vehicle (Vi) vertically under the portal frame, and
- calculate an average estimate ( $\hat{D}$ ) of said distance (D) by the average of multiple estimates ( $\hat{D}_1$ ) of said distance (D) which are thus calculated following the crossing of multiple vehicles under the portal frame.

6. Device according to Claim 5, in which the means for measuring the average speed of the vehicle are a laser.

7. Device according to Claim 5 or 6, in which the means for measuring a moment of crossing ($t_i{}^2$) of the vehicle vertically under the portal frame are a laser.

8. Computer program, **characterized in that** it comprises instructions for implementing, via a suitable device, the method according to one of Claims 1 to 4 when said program is run by a processor of the device.

9. Storage means, **characterized in that** they store a computer program comprising instructions for implementing, via a suitable device, the method according to one of Claims 1 to 4, when said program is run by a processor of the device.

**Fig. 1**

**Fig. 2**

**Fig. 3**

**Fig. 4**

**Fig. 5**

**EP 2 715 411 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5793491 A
- FR 502
- FR 503